Europäisches Patentamt

(19) European Patent Office

Office européen des brevets

(11) Veröffentlichungsnummer: **0 151 273 B1**

(12) **EUROPÄISCHE PATENTSCHRIFT**

(51) Int. Cl.⁴: **H 02 G 1/08,** H 02 G 3/06

(45) Veröffentlichungstag der Patentschrift:
24.08.88

(21) Anmeldenummer: **84115133.5**

(22) Anmeldetag: **11.12.84**

(54) Winkelförmige Leitungseinführung.

(30) Priorität: **03.02.84 DE 3403772**

(43) Veröffentlichungstag der Anmeldung:
**14.08.85 Patentblatt 85/33**

(45) Bekanntmachung des Hinweises auf die Patenterteilung:
**24.08.88 Patentblatt 88/34**

(84) Benannte Vertragsstaaten:
**AT CH FR GB IT LI NL SE**

(56) Entgegenhaltungen:
**CH - A - 589 954**
**FR - A - 548 998**
**US - A - 1 880 098**

(73) Patentinhaber: **Anton Hummel GmbH Metallwarenfabrik,
Mozartstrasse 2 - 5, D-7808 Waldkirch (DE)**

(72) Erfinder: **Gehring, Peter, Eichhofweg,
D-7809 Simonswald-Griesbach (DE)**

(74) Vertreter: **Schmitt, Hans, Dipl.-Ing. et al,
Dreikönigstrasse 13, D-7800 Freiburg (DE)**

**Beschreibung**

Die Erfindung betrifft eine winkelförmige Leitungseinführung, insbesondere Rohrkrümmer, zum Einführen von elektrischen Leitungen oder Kabeln unter einem Winkel in ein Gehäuse od. dgl., wobei das Kabel od. dgl. schräg oder parallel zur Gehäuseoberfläche verläuft und etwa rechtwinklig oder schräg in dieses eintritt und der Biegebereich des Kabels oder der Leitung von der Leitungseinführung umschlossen ist und wobei im Winkelbereich der Leitungseinführung eine Trennstelle zwischen den beiden Schenkeln der Leitungseinführung vorgesehen ist.

Zur Einführung von Leitungen oder Kabeln in ein Gehäuse sind unterschiedliche Leitungseinführungen bekannt. Läuft dabei das Kabel kurz vor seinem Eintritt in das Gehäuse in einem Winkel, werden winkelförmige Leitungseinführungen verwendet. Dabei besteht jedoch das Problem, dass die Kabel oder Leitungen nur schwer durch solche winkelförmigen Einführungen hindurchgezogen werden können. An der möglichst engen Biegung entstehen entsprechend grosse Reibungskräfte zwischen dem Isoliermantel des Kabels und der Innenseite dieser Leitungseinführung.

Es wurde deshalb schon bekannt, an der Aussenseite eines derartigen Rohrkrümmers einen Verschlussteil vorzusehen, der zunächst das Einziehen des Kabels geradlinig durch einen Schenkel der winkelförmigen Leitungseinführung erlaubt. Das Kabel muss dann in einer Schlaufe umgebogen werden, wonach es dann auch durch den zweiten Schenkel gezogen werden kann. Da die räumlichen Verhältnisse zur Schaffung einer solchen Öffnung jedoch begrenzt sind, kann es bei dickeren Kabeln Schwierigkeiten vor allem im letzten Teil des Einziehens der Schlaufe geben. Darüber hinaus müssen auch bei dieser Montage die Kabel entsprechenden Zugkräften und Reibungskräften ausgesetzt werden.

Es sind auch bereits Rohrverbinder bekannt, bei denen die beiden Schenkel eines Rohrkrümmers trennbar sind und in unterschiedlichen Winkeln zusammengefügt werden können, so dass auch stumpfwinklige Biegungen entstehen. Solche Rohrverbinder sind jedoch als Leitungsführungen nicht vorgesehen und wären dazu auch kaum geeignet, da sie praktisch keine Kräfte aufnehmen können, bei denen die Kraftrichtung in Drehrichtung eines Schenkel gegenüber dem anderen wirkt. Solche Kräfte treten jedoch an Leitungseinführungen auf, wenn die eingeführten Kabel, diese schützende Schutzschläuche oder Rohre od. dgl. einem Schrägzug ausgesetzt sind. Ein weiterer Nachteil solcher Rohrverbinder besteht darin, dass sie in montiertem Zustand unter Umständen von dem eigentlich gewollten Winkel wieder abweichen und ausserdem bei der Montage eines Kabels aufgrund ihrer Zweiteiligkeit beim Verbinden unter einem Winkel einen zusätzlichen Aufwand mit sich bringen.

Es besteht deshalb die Aufgabe, eine Leitungseinführung der eingangs erwähnten Art zu schaffen, bei der die Vorteile einer in sich starren winkelförmigen Leitungseinführung erhalten bleiben, nämlich ein genau vorgegebener Winkel sicher eingehalten wird, bei der auch Querkräfte aufgenommen werden könnten und vor allem das Einführen eines Kabels erleichtert ist, selbst wenn sein Querschnitt fast oder ganz dem Innenquerschnitt der Leitungseinführung entspricht.

Die Lösung dieser scheinbar widersprüchlichen Aufgabe besteht darin, dass die beiden Schenkel an der Aussenseite des von ihnen gebildeten Winkels schwenkbar oder schwenkbar und lösbar verbunden und an der Innenseite des Winkels lösbar verbindbar sind.

Mit Innenseite des Winkels ist dabei der Bereich des Winkelraumes gemeint, der von den beiden Schenkeln seitlich begrenzt ist, aber natürlich ausserhalb der Innenhöhlung der Leitungseinführung liegt; die Aussenseite des Winkels ist der Bereich der längsten Meridianlinie entlang den beiden Schenkel über den äusseren Scheitel des Winkels.

Aufgrund der Erfindung ist es möglich, den Verschluss an der Innenseite im Winkelraum zum Einführen eines Kabels zu lösen, so dass das Kabel geradlinig durch beide Schenkel hindurchgezogen werden kann. Nunmehr braucht lediglich die Relativverschwenkung der beiden Schenkel mit Hilfe ihres Gelenkes durchgeführt werden, wonach dann der innenseitige Verschluss in der entsprechenden Endposition in Funktion treten kann. Es ergibt sich also bei der Montage des Kabels praktisch überhaupt nicht mehr die Notwendigkeit, das Kabel od. dgl. relativ zu einer winkelförmigen Leitungseinführung zu verschieben, da die beiden Schenkel in geradliniger Flucht auf das Kabel aufgesteckt werden können. Ferner entfällt die Notwendigkeit, die beiden Teile des Rohrkrümmers nach dem Einführen des Kabels zusammenzuführen und zu verbinden, da sie an dem Gelenk bereits verbunden sind. Es genügt, sie mit ihrem Verschluss zusammenzuführen, wobei lediglich die Biegung des Kabels zusammen mit diesen Schenkeln durchzuführen ist, die in jedem Falle an dem Kabel anzubringen wäre. Dabei erleichtert das Gelenk diese Biegung erheblich, weil dadurch auch eine gewisse Führung der Biegebewegung vorgegeben ist, wenn die beiden in Gebrauchsstellung einen Winkel bildenden Teile oder Schenkel in Öffnungsposition einander unter einem Winkel von etwa 180° fortsetzen. Dadurch ist das Aufstecken der gesamten Leitungseinführung auf ein Kabel besonders einfach. Daraus ergibt sich auch, dass das Kabel bzw. die Leitung in ihrem Aussenquerschnitt praktisch dem Bohrungsquerschnitt der Leitungseinführung entsprechen kann, so dass in einer Leitungseinführung herkömmlicher Grösse ein dickeres oder grösseres Kabel eingeführt werden kann oder aber für herkömmliche Kabel eine kleinere Leitungseinführung genügt.

Dabei sind die beiden Schenkel voneinander getrennt zusammen mit einem sie durchsetzenden Kabel od. dgl. schwenkbar und in Schwenklage, in welcher sie einen Winkel bilden, verbindbar und festlegbar. Auf diese Weise ist es ebenfalls möglich, die beiden hülsenförmigen Schenkel in Längsrichtung über ein Kabel zu stecken und an der Biegestelle dann zusammen mit dem Kabel zu verschwenken, so dass die gewünschte Winkelform erreicht wird.

Eine Ausgestaltung der Erfindung von erheblicher Bedeutung kann darin bestehen, dass die Berührflächen der beiden Schenkel wenigstens eine Zentrierung, insbesondere einen Zentrierabsatz haben. Dabei kann die Zentrierung rund oder oval sein und um die Innenhöhlung der Leitungseinführung verlaufen und in Schliessstellung Formschluss in Richtung der Trennebene der beiden Teile oder Schenkel bewirken.

Diese Ausgestaltung erlaubt besonders gut die Aufnahme von auch quer zu der Leitungseinführung wirkenden Kräfte, die beispielsweise an dem einen der Schenkel als Hebelarm um die Mittelachse des anderen Schenkels wirken können, wenn Schrägzug an dem eingeführten Kabel auftritt. Es ergibt sich dann in Schliessstellung eine winkelförmige Leitungseinführung, die praktisch genauso gut bzw. genauso grosse Kräfte aufnehmen kann wie eine einstückige Leitungseinführung. Dennoch ergibt sich die erfindungsgemässe vorteilhafte einfache Montage bei der Einführung des Kabels, bei der eine Schlaufenbildung vermieden wird. Dabei ist auch vorteilhaft, dass das einfache Schliessen der beiden Teile des Einführungsteiles das Kabel nur an der Stelle einer Biegung aussetzt, an der es auch in Gebrauchsstellung gebogen sein soll.

Die beiden Schenkel können in Schliessstellung z.B. einen Winkel von 90° bilden und ihre Trennebene kann vorzugsweise jeweils unter etwa 45° zu den beiden Teilen verlaufen. Dabei ist in vorteilhafter Weise im Bereich der Zentrierung eine umlaufende Dichtung, vorzugsweise ein Dichtungsring, insbesondere ein O-Ring möglich. Dieser Dichtungsring kann über den nach innen vorstehenden Zentrieransatz gesteckt sein. Beim Verschliessen wird er dann von der Gegenzentrierung in seinen Sitz gedrückt und bewirkt so im Bereich der Zentrierung und der Trennebene die gewünschte Abdichtung vor allem gegen Feuchtigkeit von aussen.

Selbstverständlich kann die Leitungseinführung auch einen anderen Winkel als 90° bilden, so dass dann auch die Trennebene einen entsprechend anderen Winkel bildet. Darüber hinaus kann auch bei einem Winkelstück mit zwei unter 90° zueinander stehenden Schenkeln eine Trennebene unter etwas anderem Winkel haben, der nicht genau einem Gehrungsschnitt entspricht.

Eine Ausgestaltung der Erfindung kann darin bestehen, dass einer der beiden Schenkel einen zweiten, starr oder ebenfalls schwenkbar mit ihm verbundenen Winkelschenkel aufweist, der mit ihm vorzugsweise einen Winkel von etwa 90° einschliesst und in Schliessstellung eine geradlinige Fortsetzung mit dem ersten schwenkbaren Winkelschenkel bildet, so dass sich in Schliessstellung ein T-förmiges Verbindungteil ergibt. Dieses kann nun wahlweise für eine geradlinige oder eine winkelförmige Leitungsführung verwendet werden oder es können sogar ein Teil der Leitungen geradlinig ankommen, während ein weiterer Teil winkelförmig zugeführt sein kann.

Das Gelenk an der Aussenseite der Leitungseinführung und der Verschluss an der Innenseite können in unterschiedlicher Weise vorzugsweise gemäss den Ansprüchen 10 bis 19 und 31 bis 34 ausgestaltet sein.

Es sei noch erwähnt, dass zumindest dem von dem Gehäuse abgewandten Winkelschenkel eine Kabelverschraubung vorzugsweise einstückig integriert sein kann. Dadurch lässt sich die Verbindung zwischen der Einführung und dem Kabel entsprechend schnell und bequem durchführen. Ferner können jeweils an den freien Enden der Winkelschenkel Anschlussgewinde, nämlich Innen- und/oder Aussengewinde vorgesehen sein. An dem einen Ende kann dabei das Gewinde zur Befestigung der Kabelverschraubung vorgesehen sein, während das andere Gewinde zur Fixierung der Leitungseinführung an einem Gehäuse dienen kann.

Diese Leitungseinführung kann in Schliessstellung in beliebigen Richtungen Schrägzugkräfte des Kabels aufnehmen, ohne in ihrer Funktion oder Position beeinträchtigt zu werden.

Nachstehend ist die Erfindung mit ihren ihr als wesentlich zugehörigen Einzelheiten anhand der Zeichnung noch näher beschrieben. Es zeigt:

Fig. 1 einen Längsschnitt durch eine erfindungsgemässe winkelförmige Leitungseinführung, deren beide Winkelschenkel an der Aussenseite gelenkig verbunden und an der Innenseite durch einen Verschluss in Winkelstellung arretierbar sind,

Fig. 2 eine Stirnansicht auf die Mündung eines Winkelschenkels der Leitungseinführung nach Fig. 1,

Fig. 3 eine Seitenansicht der geschlossenen winkelförmigen Leitungseinführung,

Fig. 4 eine Ansicht auf die der Mündung eines Winkelschenkels gegenüberliegenden Aussenseite des zweiten Winkelschenkels und des Gelenkes,

Fig. 5 die Leitungseinführung gemäss den Figuren 1 bis 4 in Öffnungsposition,

Fig. 6 einen Längsschnitt durch eine Leitungseinführung gemäss den Figuren 1 bis 5 in teilweise geöffneter bzw. geschlossener Position mit Anordnung eines O-Ringes auf einem Zentrieransatz,
in vergrössertem Massstab,

Fig. 7 bis 11 einen Längsschnitt durch insgesamt drei abgewandelte winkelförmige Leitungseinführungen, bei denen das Gelenk durch jeweils mit den beiden Winkelschenkeln einstückig verbundene Teile gebildet ist, die zumindest in Schliessstellung der beiden Winkelschenkel formschlüssig ineinandergreifen, wobei die Schliessstellung in den Figuren 7, 8 und 10 und eine Offenstellung zweier Ausführungsbeispiele bei getrennten Winkelschenkeln in den Figuren 9 und 11 dargestellt ist,

Fig. 12 bis 14 eine winkelförmige Leitungseinführung, wobei als Gelenk eine durchgehende dünne Kunststoffhaut an der Aussenseite vorgesehen ist, in verkleinertem Massstab,

Fig. 15 bis 17 eine Ausführungsform einer Leitungseinführung, bei der mit dem einen Winkelschenkel der zweite Winkelschenkel erfindungsgemäss gelenkig und ein weiterer Winkelschenkel starr verbunden ist, im Längsschnitt einmal in Schliessposition, einmal in Offenstellung und ferner in einer Stirnansicht auf die Mündung des schwenkbaren Schenkels in Schliessstellung, in stark vergrössertem Massstab,

Fig. 18 bis 22 eine erfindungsgemässe winkelförmige Leitungseinführung aus Kunststoff mit einstückig angespritztem Klemmprofil für eine Schlauchklemmung mit einmontiertem Schlauch und eingeführtem Kabel, wobei gleichzeitig eine Drehkupplung zwischen dem gehäuseseitigen Winkelschenkel und einem Gewindeansatz od. dgl. mit unterschiedlichen Kupplungsmöglichkeiten vorgesehen ist,

Fig. 23 einen Längsschnitt und

Fig. 24 eine Stirnansicht einer Leitungseinführung mit abgewandeltem Rastverschluss,

Fig. 25 einen Längsschnitt und

Fig. 26 eine Stirnansicht einer Leitungseinführung mit einer weiteren Abwandlung des Rastverschlusses am inneren Winkelraum sowie

Fig. 27 eine T-förmige Leitungseinführung mit zwei schwenkbaren Winkelschenkeln und

Fig. 28 die Leitungseinführung gemäss Fig. 27 mit in eine parallele Lage zueinander verschwenkten Winkelschenkeln,

Fig. 29 einen abgewandelten Rastverschluss.

Bei den im folgenden zu beschreibenden Ausführungsbeispielen werden für übereinstimmende Teile jeweils gleiche Bezugszeichen gewählt, so dass die entsprechende Beschreibung der einen Ausführungsform sinngemäss auch für die andere gilt.

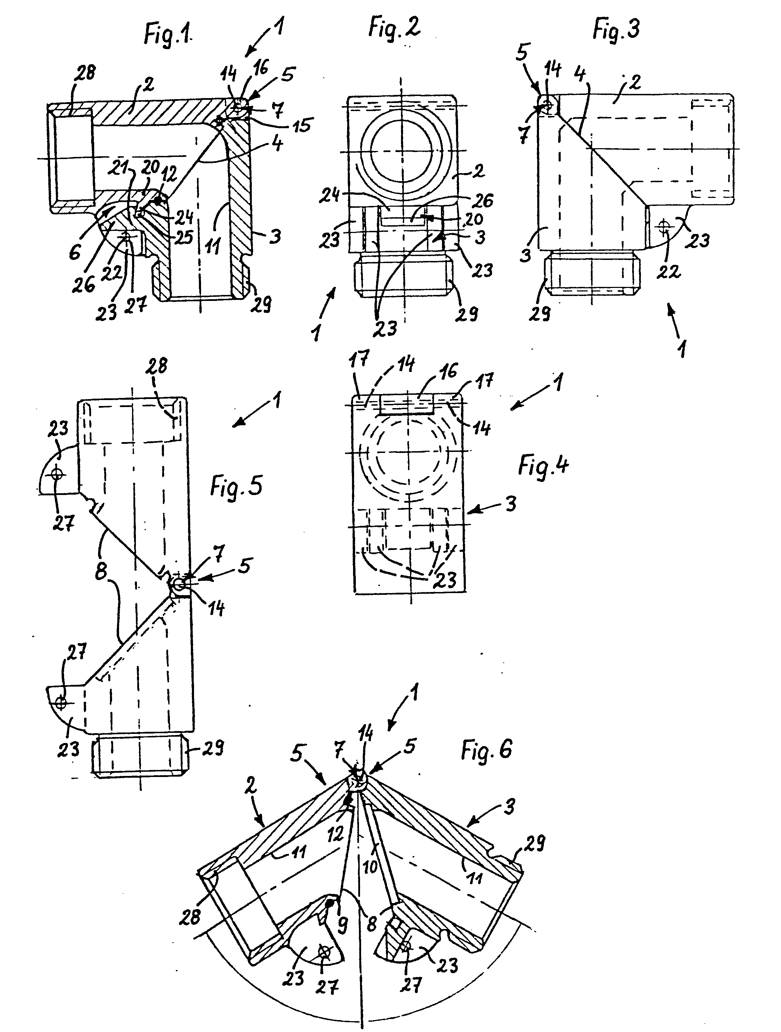

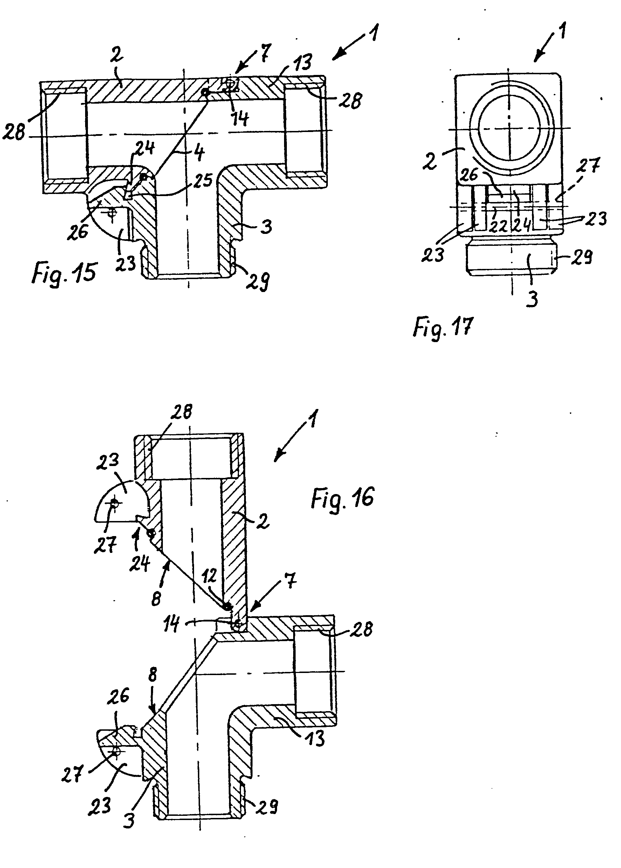

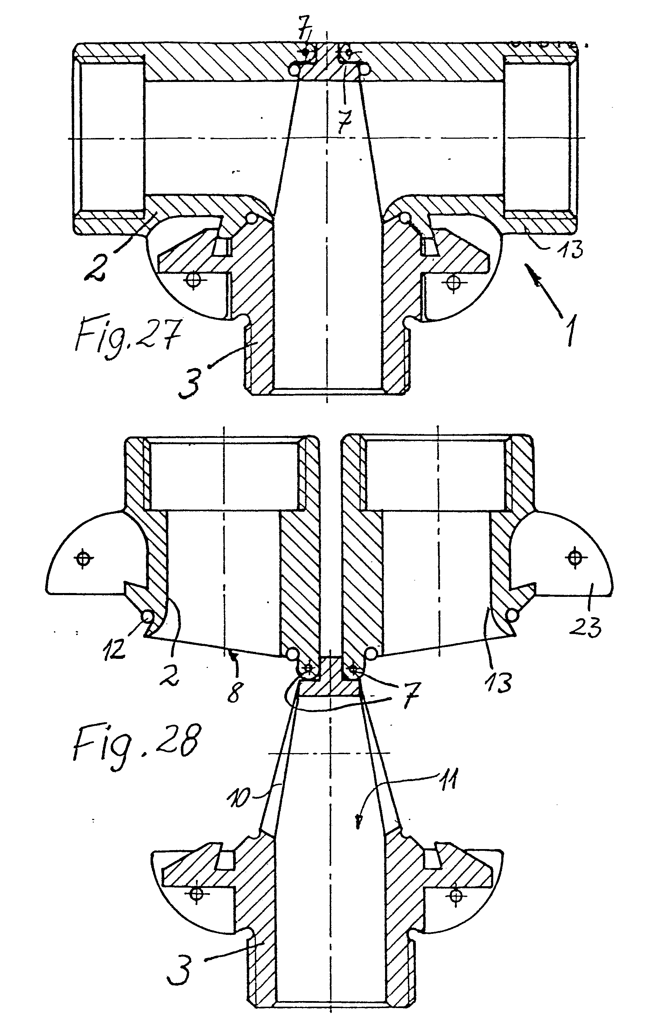

Eine im ganzen mit 1 bezeichnete winkelförmige Leitungseinführung, die gemäss den Figuren 1, 3, 7, 8, 10, 12, 23, 25 einem Rohrkrümmer und gemäss Fig. 15 und 27 einem Rohr-T-Stück entsprechen kann, dient vor allem zum Einführen von elektrischen Leitungen oder Kabeln unter einem Winkel in ein Gehäuse od. dgl. Dabei sind in der Zeichnung weder die Kabel noch das Gehäuse näher dargestellt. Die winkelförmige Leitungseinführung 1 erlaubt dabei die Zufuhr von Kabeln od. dgl. schräg oder parallel zur Gehäuseoberfläche, während das Kabel dann etwa rechtwinklig oder gegebenenfalls auch schräg in das Gehäuse eintreten kann. Der dabei gebildete Biegebereich des Kabels oder der Leitung ist von der erfindungsgemässen Leitungseinführung 1 umschlossen.

Zwischen den beiden Schenkeln 2 und 3 der Leitungseinführung 1 ist jeweils eine Trennstelle 4 vorgesehen, wobei jedoch die beiden Schenkel 2 und 3 an der Aussenseite 5 des von ihnen gebildeten Winkelstückes gelenkig oder schwenkbar verbunden und an der Innenseite 6 lösbar verbindbar sind. Diese Verbindung an der Aussenseite 5 besteht zumindest während dem Zusammenfügen der beiden Schenkel 2 und 3 gemäss Fig. 6. Die Innenseite 6 ist dabei also der Winkelraum, der von den beiden Schenkeln umschlossen wird und wo sich diese beiden Schenkel im Inneren dieses Winkelraumes treffen. Die Aussenseite 5 ist demgegenüber der Bereich der längsten Meridianlinie entlang beiden Winkelschenkeln über den grössten Krümmungsbereich hinweg.

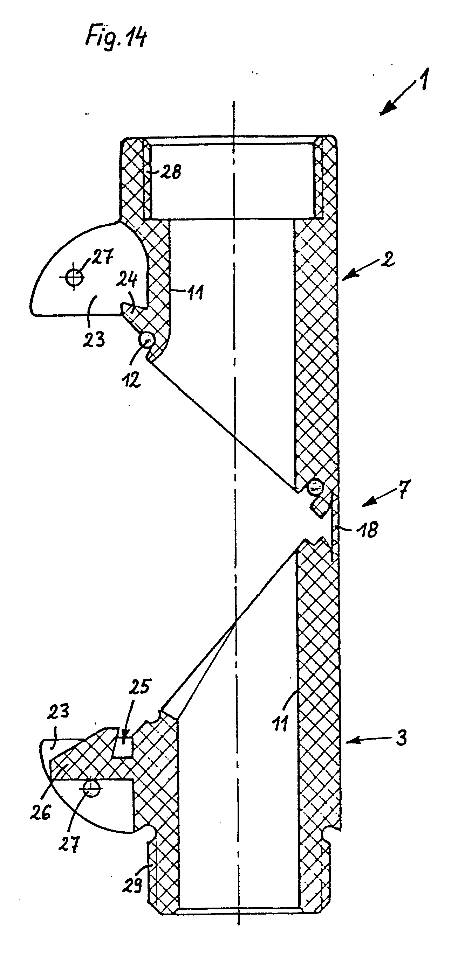

Aus den Figuren 5, 8, 11 und 14 sowie ferner auch aus Fig. 16 ergibt sich, dass die beiden in Gebrauchsstellung einen Winkel bildenden Teile oder Schenkel 2 und 3 in Öffnungsposition einander unter einem Winkel von 180° fortsetzen. In dieser Position kann also die Leitungseinführung 1 bequem auf ein Kabel aufgeschoben werden, ohne dass das Kabel durch einen engen Winkel hindurch gedrückt oder gezogen werden muss. Danach können dann die beiden Winkelschenkel 2 und 3 zusammen mit dem Kabel in die Schliessstellung zurückgebogen werden, wobei das an der Aussenseite befindliche Gelenk 7 eine Führung und ein Widerlager für diese Biegebewegung bildet. Die Verformung des Kabels beschränkt sich somit auf eine einfache Biegebewegung unter Führung durch die Kabeleinführung 1, so dass Reibungen in diesem Kabelbereich weitestgehend ausgeschlossen sind.

In den verschiedenen Ausführungsbeispielen, z. B. auch in Fig. 6, 9 oder 11 erkennt man, dass die Berührflächen 8 der beiden Schenkel 2 und 3, die in deren Schliessstellung die Trennstelle 4 bilden, eine Zentrierung in Form eines Zentrierabsatzes 9 mit einer entsprechenden Einsenkung 10 an dem Gegenstück haben. Diese Zentrierung 9 und 10 kann dabei rund oder gemäss dem Ausführungsbeispiel aufgrund des Schrägverlaufes der Trennstelle 4 oval sein und verläuft um die Innenhöhlung 11 der Leitungseinführung 1 herum. In Schliessstellung ergibt sich somit Formschluss in Richtung der Trennebene der beiden Teile oder Schenkel 2 und 3, so dass in dieser Position beliebige Quer- oder Schwenkkräfte auf die beiden Schenkel 2 und 3 relativ zueinander aufgenommen werden können, ohne dass diese ihre Position zueinander verändern. Dabei bilden in diesen Beispielen die beiden Schenkel 2 und 3 in Schliessstellung einen Winkel von 90° zueinander und ihre Trennebene verläuft jeweils unter 45° zu den beiden Teilen 2 und 3. Andere Winkel sind möglich.

Im Bereich der Zentrierung erkennt man eine umlaufende Dichtung, die im Ausführungsbeispiel als Dichtring, bevorzugt als O-Ring 12 ausgebildet ist. Der O-Ring 12 ist dabei auf den vorstehenden Zentrieransatz 9 gesteckt. Beim Schliessen findet er eine Dichtposition in der Gegenausnehmung 10, wie man es z. B. in den Figuren 1, 7, 8 und 10 erkennt. Auf diese Weise besteht also um die Trennstelle 4 herum eine gute Abdichtung, die das Eindringen von Feuchtigkeit sicher verhindert, wobei dennoch diese Lösung preiswert herstellbar ist. Der für eine gute Kraftübertragung erforderliche Zentrieransatz kann gleichzeitig als Träger der Dichtung ausgenutzt werden. Genauso gut kann jedoch der Dichtring oder O-Ring 12 an dem anderen Schenkel in der entsprechenden Zentriereinsenkung eingefügt sein.

Das Ausführungsbeispiel gemäss den Figuren 15 bis 17 bildet insofern eine Besonderheit, als einer der beiden Schenkel, nämlich der Schenkel 3 neben dem gelenkig angeschlossenen Schenkel 2 einen weiteren, starr mit ihm verbundenen Winkelschenkel 13 aufweist, der mit ihm im Ausführungsbeispiel einen Winkel von 90° einschliesst und in Schliessstellung eine geradlinige Fortsetzung mit dem schwenkbaren Winkelschenkel 2 bildet, so dass sich in Schliessstellung ein T-förmiger Verbindungsteil ergibt. Somit können in der Position nach Fig. 16 Kabel und Leitungen eingeführt werden, die später gebogen sein sollen, während durch den Schenkel 13 Kabel oder Leitungen eingeführt werden können, die geradlinig senkrecht in eine Gehäuseoberfläche eingeführt werden sollen. Besonders zweckmässig ist diese Leitungseinführung 1 für solche Fälle, in denen sowohl gebogene als auch geradlinige Leitungen zusammengeführt und in ein Gehäuse eingeführt werden sollen bzw. aus einem Gehäuse gemeinsam austreten und dann voneinander abzweigen sollen. Darüber hinaus ist dieses Verbindungsteil auch für andere Anwendungsfälle als die Leitungseinführung im Gehäuse geeignet, wenn Abzweigungen von Kabeln od. dgl. durchgeführt werden sollen.

In den Figuren 27 und 28 ist ein ähnliches Ausführungsbeispiel wie in den Figuren 15 bis 17 dargestellt, nämlich eine T-förmige Leitungseinführung, bei welcher dann aber nicht nur der Winkelschenkel 2 gegenüber dem Winkelschenkel 3 schwenkbar ist, sondern auch der Winkelschenkel 13 gegenüber dem Winkelschenkel 3 schwenkbar ist. Der zweite Winkelschenkel 13 ist also ebenfalls schwenkbar, kann gemäss Fig. 27 aber in Schliessstellung eine geradlinige Fortsetzung mit dem ersten schwenkbaren Winkelschenkel 2 bilden, so dass sich wiederum in Schliessstellung ein T-förmiges Verbindungsteil ergibt. Bei dieser T-förmigen Anordnung mit zwei schwenkbaren Schenkeln 2 und 13 liegen die beiden Schwenkachsen der Gelenke 7 parallel zueinander mit geringem Abstand vorzugsweise symmetrisch zur Mittelachse des diese Schwenkachsen tragenden Schenkels 3. Auf diese Weise könnte auch eine Leitungsverzweigung gebildet werden oder es könnten zwei zunächst parallel laufende Kabel voneinander weg oder zwei aufeinander zulaufende Kabel gemeinsam in einer Richtung weitergeführt werden.

Allen Ausführungsbeispielen ist gemeinsam, dass das Gelenk 7 für die Relativverschwenkung der beiden Teile 2 und 3 in Schwenkrichtung zueinander zum Trennen ihrer Berührungsflächen 8 in der Verlängerung der Trennebene an der Aussenseite 5 des Winkelstückes quer zum Verlauf eines Kabels od. dgl. in Gebrauchsstellung angeordnet ist. Gemäss den Ausführungsbeispielen der Figuren 1 bis 6 und 15 bis 17 kann dabei das Gelenk 7 im wesentlichen von einem Querstift 14 gebildet sein, der ineinandergreifende Gegenstücke 15 und Vorsprünge 16 an den beiden gelenkig verbundenen Teilen 2 und 3 durchsetzt. Man erkennt z.B. in Fig. 4 deutlich einen solchen Vorsprung 16, der mit dem Schenkel 2 verbunden ist und zwischen zwei Gegenstücke 17 an dem Schenkel 3 eingreift. Beide werden gemeinsam von dem gestrichelt angedeuteten Querstift 14 durchsetzt.

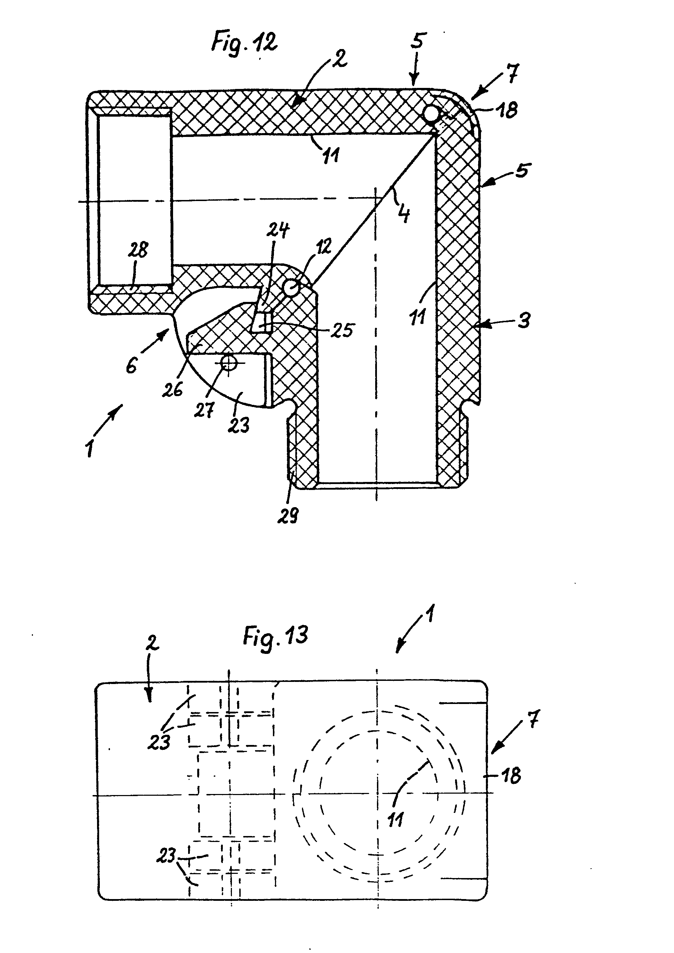

Die Figuren 12 bis 14 zeigen eine Ausführungsform, bei welcher das die beiden Teile 2 und 3 verbindende Gelenk 7 durch eine mit beiden Teilen im Ausführungsbeispiel einstückig verbundene, biegsame Kunststoffhaut 18 gebildet ist. Diese Ausführungsform bietet sich bei einer Leitungseinführung aus Kunststoff an, die dann eine einstückige Herstellung erlaubt. Diese Lösung ist preiswert und ohne weiteres möglich, da das Gelenk 7 in der Regel nicht allzu häufig betätigt werden wird.

In den Figuren 10 und 11 ist eine Lösung dargestellt, bei welcher die beiden gegeneinander schwenkbaren Teile 2 und 3 an ihrer Aussenseite 5 als Gelenk 7 zueinander passende, beim Verschwenken in Schliessstellung einander entsprechend Fig. 10 hintergreifende Krallen oder Haken 19 aufweisen. Dabei ist in Fig. 11 angedeutet, dass die das Gelenk 7 bildenden Krallen 19 in aufgeschwenkter Position aushängbar sind. Sie können in Gebrauchsstellung rastend ineinandergreifen. Sie können bevorzugt aus Kunststoff bestehen und die Rastverbindung dieser das Gelenk 7 bildenden Krallen 19 kann in geöffneter Position lösbar sein, so dass auch eine getrennte Aufsteckbarkeit der beiden Schenkel 2 und 3 auf ein Kabel gegeben ist. Die Verbindung vor dem Zusammenbiegen des Kabels kann dann durch einfaches Verrasten der Krallen 19 erfolgen, die dann in verschwenkter Position und insbesondere in Schliessstellung gemäss Fig. 10 eine kraftschlüssige Verbindung darstellen.

Wie bereits erwähnt, können die beiden Teile 2 und 3 an der Innenseite 6 des Winkels verbindbar sein. Dabei sind beispielsweise in den Figuren 1, 7, 8, 10 und 12 an der Innenseite 6 des Winkels für die Schliessstellung jeweils Rastverschlüsse vorgesehen, wobei dieser Rastverschluss in diesem Ausführungsbeispiel mit einem die ineinander rastenden Teile 20 und 21 hintergreifenden Sicherheitsstift 22 gegen ungewolltes Öffnen sicherbar ist. Selbstverständlich wäre es auch möglich, den Verschluss an der Innenseite 6 der beiden Schenkel 2 und 3 durch einen durch sich überlappende Vorsprünge 23 hindurchsteckbaren Verschlussstift 22 alleine zu bilden.

In den Ausführungsbeispielen erkennt man jeweils an dem Schenkel 2 einen etwas schräg gerichteten Vorsprung 24, der in eine entsprechend ausgebildete Ausnehmung 15 einrasten kann. Neben der Ausnehmung 25 ist noch ein Ansatz 26 vorgesehen, der für das Öffnen der Rastverbindung etwas niedergedrückt werden kann, zur Sicherung der Rastverbindung aber von dem Sicherungsstift 22 in Schliessstellung formschlüssig untergriffen ist. Diese Ausführungsform ist besonders geeignet, wenn die Leitungseinführung aus Kunststoff besteht.

Vor allem in den Figuren 2 und 17, aber auch 5, 6 und 16 erkennt man, wie von den Innenseiten der beiden Schenkel 2 und 3 nahe der Trennflächen die Vorsprünge 21 radial abstehen, die in Schliessstellung der beiden Schenkel einander überlappen und miteinander fluchtende Lochungen 27 für den Verschluss- und/oder Sicherungsstift 22 haben. Dabei befinden sich diese Vorsprünge 23 beidseitig den Rastnasen 24.

Bei einer Ausführung der Leitungseinführung aus Metall kann anstelle der Ausnehmung 25 zum Übergreifen der Rastnase 24 ein federnder Querstift an dem einen und wiederum eine mit diesem zusammenwirkende Rastnase 24 vorgesehen sein, die zusammen einen Rastverschluss bilden und wiederum zusätzlich durch einen Sicherungsstift 22 vervollständigt sein kann. Die Nachgiebigkeit innerhalb der Rastverbindung wird dann alleine von dem federnden Stift vorgegeben, während bei den Kunststoff-Ausführungen die beiden hintereinandergreifenden Teile jeweils etwas nachgeben können.

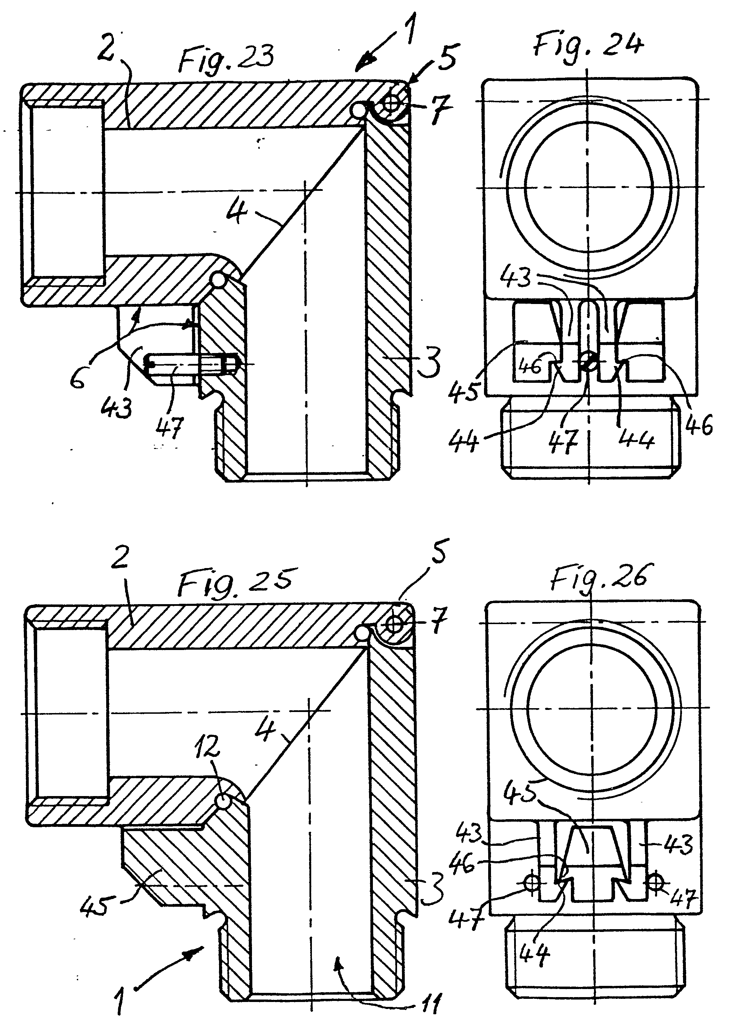

In den Figuren 23 bis 26 sind Leitungseinführungen 1 mit abgewandelten Rastverschlüssen an der Innenseite bzw. dem inneren Winkelraum der beiden Schenkel 2 und 3 dargestellt. Selbstverständlich können diese Rastverschlüsse auch bei den vorbeschriebenen Ausführungsbeispielen oder den T-förmigen Leitungseinführungen verwendet werden, also mit einem anderen Gelenk 7 an der Aussenseite 5 kombiniert sein.

In Fig. 23 und 24 erkennt man, dass als Rastverschluss in dem von den beiden Schenkeln 2 und 3 gebildeten Winkelraum an dem einen Schenkel 2 zwei parallele Flansche 43 mit voneinander wegweisenden Vorsprüngen 44 und an dem anderen Schenkel 3 zwei Widerlager 45 mit Absätzen 46 vorgesehen sind, die in Schliessstellung von den Vorsprüngen 44 hintergriffen bzw. untergriffen sind. In dem Winkelschenkel 3 mit dem Widerlager 45 ist im Ausführungsbeispiel ein zwischen die beiden Flansche 43 des anderen Winkelschenkels 2 passender Stift 47 einsetzbar, im Ausführungsbeispiel einschraubbar, der die beiden federnden Lappen bzw. Flansche 43 in Schliessstellung auf Abstand, also in Einrastposition hält. Der Stift 47 wird also erst nach dem Verrasten eingeschraubt, um die Rastposition zu sichern. Zum Lösen der Rastverbindung kann der Stift 47 zunächst seinerseits entfernt werden, so dass dann die beiden Flansche 43 aufgrund ihrer Federkraft zusammendrückbar sind, bis ihre Vorsprünge 44 aus dem Bereich der Absätze 46 herausgelangen.

Der abstandhaltende Stift 47 ist dabei im Ausführungsbeispiel auf der Höhe der Absätze 46 der Widerlager 45 bzw. auf der Höhe der Vorsprünge 44 der Halteflansche 43 angeordnet.

In den Figuren 25 und 26 erkennt man, dass zwei parallele Halteflansche 43 mit zueinander gerichteten Vorsprüngen oder Haken 44 an dem einen Winkelschenkel 2 befestigt sind, die in Schliessstellung der Leitungseinführung 1 Vorsprünge 46 an einem zwischen ihnen rastend eingreifenden Widerlager 45 untergreifen, wobei im Ausführungsbeispiel seitlich der federnden Flansche 43 vorzugsweise auf der Höhe der Haken 44 Anschlagstifte 47 einsetzbar sind. Es handelt sich praktisch um eine umgekehrte Anordnung wie bei den Figuren 23 und 24. Zum Lösen der Rastverbindung der Fig. 26 werden die beiden Stifte 47 entfernt, wonach die beiden Halteflansche 43 voneinander weggebogen werden können, bis ihre Haken 44 aus dem Bereich der Vorsprünge 46 des mittleren Widerlagers gelangen. Nunmehr kann die Rastverbindung geöffnet werden. Beim Schliessen verfährt man umgekehrt, wobei die schräge oder keilförmige Ausbildung des Widerlagers ähnlich wie die entsprechend trichterförmige Einführung zwischen die beiden Widerlager 45 der Fig. 24 das Einrasten erleichtert und begünstigt.

Man erkennt noch bei allen Ausführungsbeispielen, dass jeweils an den freien Enden der Winkelschenkel 2 und 3 Anschlussgewinde vorgesehen sein können, die dabei einmal als Innengewinde 28 und einmal als Aussengewinde 29 dargestellt sind. Es können aber auch an beiden Schenkeln nur Innengewinde oder nur Aussengewinde je nach Bedarf vorgesehen sein. Ein Aussengewinde 29 an dem äusseren Schenkel 3 hat den Vorteil, dass hier von dem Gehäuse, in welches ein Kabel einzuführen ist, abgewandt eine Kabelverschraubung integriert sein kann. Dadurch kann die Leitungseinführung 1 eine zusätzliche Funktion erhalten, weil dann das eingeführte Kabel nicht nur in seine Winkelposition gebogen wird, sondern gleichzeitig auch gegen Zugkräfte gesichert werden kann.

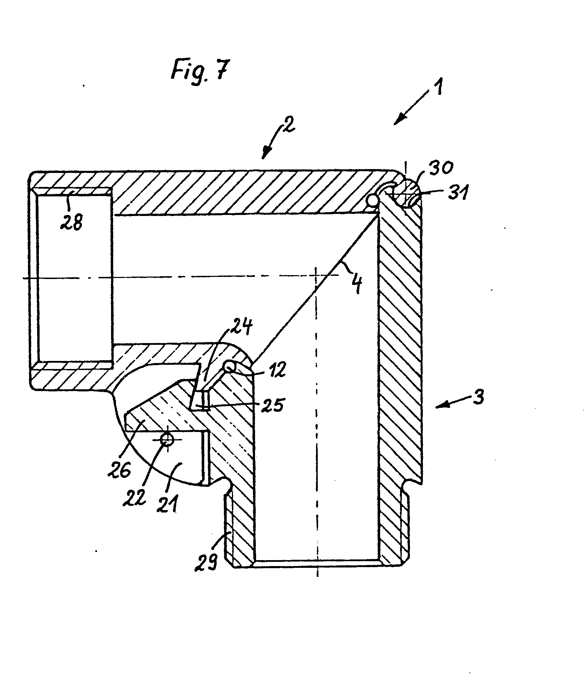

In den Figuren 7, 8 und 9 sind zwei Ausführungsbeispiele dargestellt, bei denen das Gelenk 7 durch einstückig angespritzte oder angeformte Teile gebildet ist, die lösbar sind, wie es schon ähnlich bei der Ausführungsform nach Fig. 10 und 11 beschrieben wurde.

Bei Fig. 7 erkennt man, dass der eine Winkelschenkel 2 eine einstückig angespritzte Gelenkachse 30 und der andere Winkelschenkel 3 eine diese in sich aufnehmende nutförmige Einsenkung 31 als insgesamt lösbares Gelenk aufweisen, wobei die Nut 31 den Gelenkzapfen 30 od. dgl. in Schliessstellung in Richtung des schwenkbaren Winkelschenkels 2 hintergreift. Dies ist in Fig. 7 deutlich und dadurch wird erreicht, dass in dieser Schliessstellung die beiden Winkelschenkel 2 und 3 trotz ihrer Lösbarkeit in geöffneter Position sicher zusammenhalten und beliebige auch seitliche Kräfte übertragen können. An der Innenseite 6 ist wiederum ein schon beschriebener Rastverschluss vorgesehen.

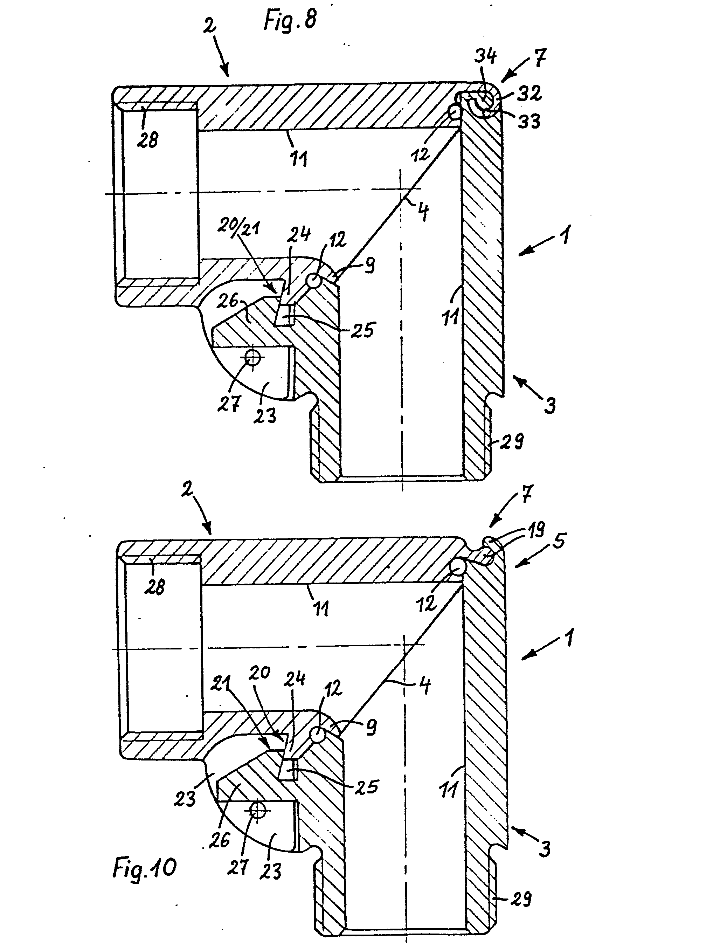

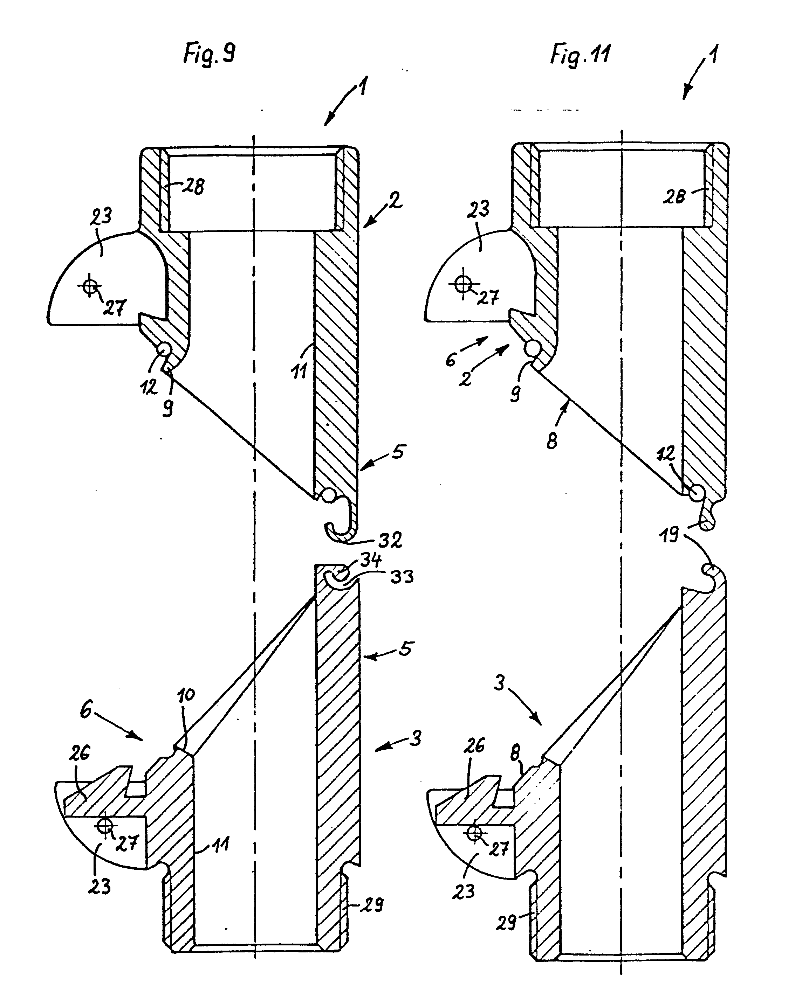

Fig. 8 und 9 zeigt die beiden unterschiedlichen Positionen einer abgewandelten Ausführungsform. Der eine Winkelschenkel 2 hat dabei einen im Querschnitt etwa kreisbogenförmigen und hakenförmigen, nach innen gerichteten Ansatz 32 und der andere Winkelschenkel 3 hat im Gelenkbereich eine dazu passende Nut 33, die um einen im Querschnitt gerundeten Steg 34 herum verläuft; in Schliessstellung gemäss Fig. 8 setzt dabei die Nut 33 den Bogen des hakenförmigen Halteteiles oder Ansatzes 32 zumindest um den Schwenkweg des Winkelschenkels 2 fort. Man erkennt deutlich

in Fig. 8 den entsprechenden Freiraum an der Stirnseite des Ansatzes 32, der das Aufschwenken aus der in Fig. 8 dargestellten Position in die Stellung nach Fig. 9 zeigt. Dabei ist in Fig. 9 ausserdem dargestellt, dass auch dieses Gelenk öffenbar sein kann. Dies kann dann erreicht sein, wenn der hakenförmige Halteansatz 32 elastisch aufbiegbar und somit dann die beiden Winkelschenkel 2 und 3 in geöffneter Position voneinander trennbar sind. Ferner ist auch bei steifem Ansatz 32 ein Ein- und Auskuppeln der beiden Winkelschenkel an ihrem Gelenk durch eine seitliche Verschiebung in Orientierungsrichtung des Steges 34 möglich.

An dieser Stelle sei erwähnt, dass die trennbaren Winkelschenkel 2 und 3 zum Montieren eines Kabels auch zunächst lose auf das Kabel aufgesteckt und vor ihrer Verbindung im Gelenkbereich mit dem Kabel verschwenkt und dann erst in der Schwenkposition verbunden werden könnten. Dies würde eine vorsichtigere und allmählichere Krümmung des Kabels bei weitgehender Vermeidung von Relativ-Bewegungen in Längsrichtung der Schenkel erlauben.

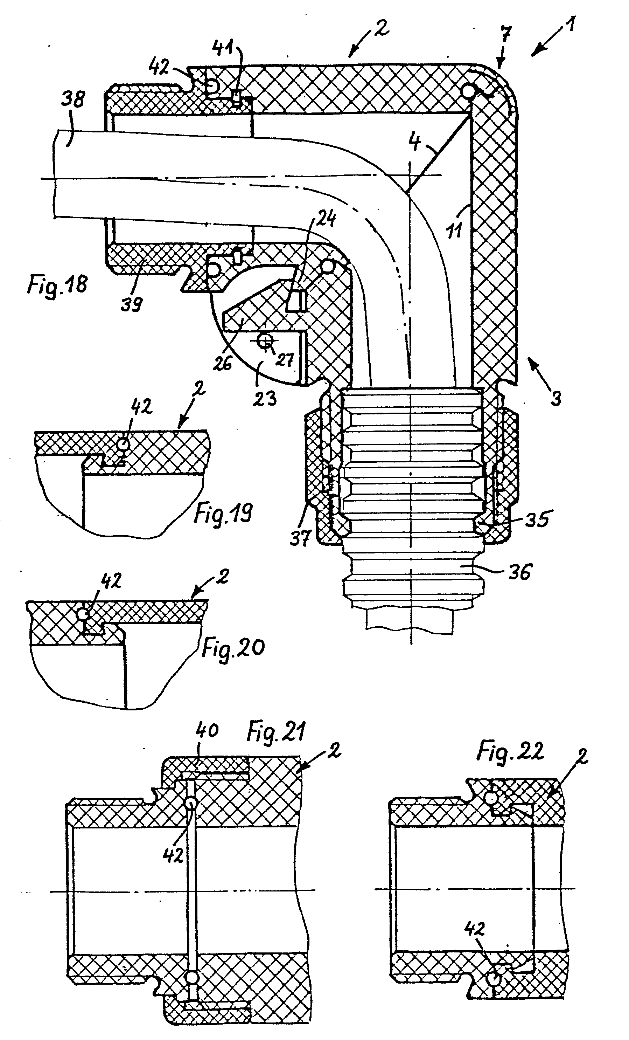

Eine wichtige Ausgestaltung der Erfindung ist in den Fig. 18 bis 22 dargestellt. Man erkennt, dass in diesem Falle die Leitungseinführung 1 einstückig ein Klemmprofil 35 für das Einklemmen eines zumindest an der Aussenseite gewellten Schlauches 36 und eine dazu passende Überwurfmutter 37 an dem dem Gehäuse abgewandten Winkelschenkel 3 hat. Somit kann mit diesem angespritzten Klemmprofil 35 eine Schlauchklemmung mit montiertem Schlauch 36 und eingeführtem Kabel 38 durchgeführt werden. Dabei erkennt man in dieser Fig. 18 auch noch, wie das Kabel 38 in Gebrauchsstellung an der Innenecke des Krümmers zur Anlage kommen wird, was auch bei allen übrigen Ausführungsbeispielen ähnlich erfolgt.

Fig. 18 bis 22 zeigt vor allem eine Ausgestaltung der Erfindung, die darin besteht, dass der anschlussseitige, mit dem Gehäuse verbindbare Gewindeteil 39 und die Leitungseinführung 1 selbst drehbar miteinander gekuppelt sein können. Dadurch ist eine selbsttätige Anpassung der Leitungseinführung 1 an unterschiedliche Schrägzüge möglich, die in unterschiedlichen Winkeln zu dem gehäuseseitigen Winkelschenkel 2 wirken können. Dies ist vor allem auch dann vorteilhaft, wenn die Leitungseinführung an einem Maschinenteil vorgesehen ist, welches Schwingungen oder sonstigen Bewegungen ausgesetzt sein kann. Dabei ist vor allem die Kombination der Drehbarkeit und der Schlauchklemmung vorteilhaft, weil dann solche Bewegungen von dem Schlauch 36 gut auf die Leitungseinführung 1 und deren Drehverbindung übertragen werden können.

Unterschiedliche Drehverbindungen sind dabei in den Figuren 18 bis 22 dargestellt. So kann der Gewindestutzen 39 mit der winkelförmigen Leitungseinführung 1 und deren ihm zugewandten Winkelschenkel 2 mit einer auf Anschlag aufgeschraubten Überwurfmutter 40 drehbar gekuppelt sein. Es ist aber auch möglich, dass die Verbindung durch Vernieten oder Einbördeln eines der drehbar zu verbindenden Teile erfolgt. Ferner kann gemäss Fig. 18 ein Sicherungsring 41 oder gemäss den Fig. 19, 20 und 22 eine Schnappvorrichtung zwischen den beiden zu kuppelnden Teilen vorgesehen sein.

Ferner erkennt man in diesen Ausführungsbeispielen zwischen den beiden drehbar verbundenen Teilen jeweils einen Dichtungsring 42, durch den auch in diesem drehbaren Bereich das Eindringen von Feuchtigkeit verhindert werden kann. Es sei noch erwähnt, dass der Sicherungsring 41 von innen oder Aussen in einen entsprechenden Einstich oder hinter einen Bund eingreifen kann und dass eine Rast- oder Schnappverbindung mit einem inneren Bund und einem darübergreifenden Absatz oder umgekehrt vorgesehen sein kann, wie es durch die Fig. 19 und 20 oder auch 22 angedeutet ist.

Dabei ist Fig. 18 bezüglich des Gelenkes 7 ähnlich ausgebildet wie es in Fig. 12 bis 14 dargestellt ist. Selbstverständlich können auch alle anderen vorbeschriebenen Gelenklösungen oder sonstige Gelenklösungen an der Aussenseite der in Fig. 1 dargestellten Leitungseinführung 1 vorgesehen sein.

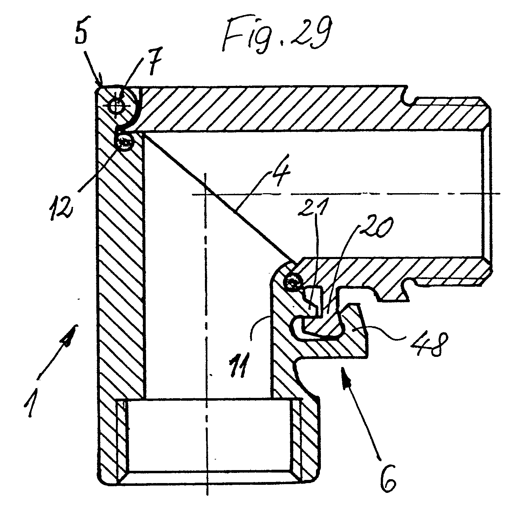

Fig. 29 zeigt eine Ausführungsform einer Leitungseinführung 1, bei welcher die ineinanderrastenden Teile 20 und 21 des Rastverschlusses in Schliessstellung von einer zweiten Raste 48, im Ausführungsbeispiel einen federnden Haken, übergriffen und gesichert ist. Dadurch kann eine Sicherung des Rastverschlusses ohne einen Sicherungsstift 27 oder 47 erzielt werden.

Wenigstens einer der Winkelschenkel kann — wie bereits angedeutet – ein Innengewinde haben. Dadurch ist es möglich, ein in das Innengewinde einschraubbares Rohrstück zur Anpassung der Drehstellung der gesamten winkelförmigen Leitungseinführung vorzusehen. Diese Korrekturmöglichkeit ist dann davon abhängig, wie tief das einschraubbare Rohrstück vor dem Ende des Innengewindes des Winkelschenkels angeordnet wird.

**Patentansprüche**

1. Winkelförmige Leitungseinführung, insbesondere Rohrkrümmer, zum Einführen von elektrischen Leitungen oder Kabeln unter einem Winkel in ein Gehäuse od.dgl., wobei das Kabel schräg oder parallel zur Gehäuseoberfläche verläuft und etwa rechtwinklig oder schräg in dieses eintritt und der Biegebereich des Kabels oder der Leitung von der Leitungseinführung umschlossen ist und wobei im Winkelbereich der Leitungseinführung eine Trennstelle zwischen den beiden Schenkeln der Leitungseinführung vorgesehen ist, dadurch gekennzeichnet, dass die beiden Schenkel (2, 3) an der Aussenseite (5) des von ihnen gebildeten Winkels schwenkbar oder schwenk- und lösbar verbunden und an der Innenseite (6) des Winkels lösbar verbindbar sind.

2. Leitungseinführung nach Patentanspruch 1, dadurch gekennzeichnet, dass die beiden Schenkel (2, 3) voneinander getrennt zusammen mit einem sich durchsetzenden Kabel od.dgl. schwenkbar und in Schwenklage, in welcher sie einen Winkel bilden, verbindbar und festlegbar sind.

3. Leitungseinführung nach Anspruch 1 oder 2, dadurch gekennzeichnet, dass die beiden in Gebrauchsstellung einen Winkel bildenden Teile (2, 3) in Öffnungsposition einander unter einem Winkel von 180° fortsetzen.

4. Leitungseinführung nach einem der Ansprüche 1 bis 3, dadurch gekennzeichnet, dass die Berührflächen (8) der beiden Schenkel wenigstens eine Zentrierung, insbesondere einen Zentrierabsatz (9), haben.

5. Leitungseinführung nach einem der Ansprüche 1 bis 4, dadurch gekennzeichnet, dass die Zentrierung (9, 10) rund oder oval ist und um die Innenhöhlung (11) der Leitungseinführung (1) verläuft und in Schliessstellung Formschluss in Richtung der Trennebene der beiden Teile oder Schenkel vorgesehen ist.

6. Leitungseinführung nach einem der Ansprüche 1 bis 5, dadurch gekennzeichnet, dass die beiden Schenkel (2, 3) in Schliessstellung einen Winkel von 90° bilden und ihre Trennebene vorzugsweise jeweils unter etwa 45° zu den beiden Teilen verläuft.

7. Leitungseinführung nach einem der Ansprüche 1 bis 6, dadurch gekennzeichnet, dass im Bereich der Zentrierung (9) eine umlaufende Dichtung, vorzugsweise ein Dichtring, insbesondere ein O-Ring (12), angeordnet ist.

8. Leitungseinführung nach einem der Ansprüche 1 bis 7, dadurch gekennzeichnet, dass der Dichtring, insbesondere O-Ring, über den vorstehenden Zentrieransatz (9) gesteckt ist.

9. Leitungseinführung nach einem der Ansprüche 1 bis 8, dadurch gekennzeichnet, dass einer der beiden Schenkel einen zweiten, starr oder ebenfalls schwenkbar mit ihm verbundenen Winkelschenkel (13) aufweist, der mit ihm vorzugsweise einen Winkel von etwa 90° einschliesst und in Schliessstellung eine geradlinige Fortsetzung mit dem ersten schwenkbaren Winkelschenkel (2) bildet, so dass sich in Schliessstellung ein T-förmiges Verbindungsteil ergibt.

10. Leitungseinführung nach einem der Ansprüche 1 bis 9, dadurch gekennzeichnet, dass das Gelenk (7) od.dgl. für die Relativbewegung der beiden Teile in Schwenkrichtung zueinander zum Trennen ihrer Berührungsflächen (8) in der Verlängerung der Trennebene an der Aussenseite des Winkelstückes quer zum Verlauf eines Kabels od.dgl. in Gebrauchsstellung angeordnet ist.

11. Leitungseinführung nach einem der Ansprüche 1 bis 10, dadurch gekennzeichnet, dass das Gelenk (7) von einem Querstift (14) gebildet ist, der ineinandergreifende Vorsprünge (16) und Gegenstücke (15) an den beiden gelenkig verbundenen Teilen durchsetzt.

12. Leitungseinführung nach einem der Ansprüche 2 bis 10, dadurch gekennzeichnet, dass das die beiden Teile (2, 3) verbindende Gelenk (7) durch eine mit beiden Teilen vorzugsweise einstückig verbundene, biegsame Kunststoffhaut (18) gebildet ist.

13. Leitungseinführung nach einem der Ansprüche 1 bis 11, dadurch gekennzeichnet, dass die beiden gegeneinander schwenkbaren Teile an ihrer Aussenseite (5) als Gelenk (7) zueinander passende, insbesondere beim Verschwenken in Schliessstellung einander hintergreifende Krallen (19) od.dgl. aufweisen.

14. Leitungseinführung nach einem der Ansprüche 1 bis 10, dadurch gekennzeichnet, dass die das Gelenk (7) bildenden Krallen (19) der beiden Teile in aufgeschwenkter Position aushängbar sind.

15. Leitungseinführung nach einem der Ansprüche 1 bis 10 und 14, dadurch gekennzeichnet, dass die das Gelenk bildenden Krallen rastend ineinandergreifen.

16. Leitungseinführung nach einem der Ansprüche 1 bis 10 und 13 bis 15, dadurch gekennzeichnet, dass sie vorzugsweise aus Kunststoff bestehen und die Rastverbindung der das Gelenk (7) bildenden Krallen (19) in geöffneter Position lösbar ist.

17. Leitungseinführung nach einem der Ansprüche 1 bis 16, dadurch gekennzeichnet, dass an der Innenseite (6) des Winkels für die Schliessstellung ein Rastverschluss vorgesehen ist, der vorzugsweise mit einem die ineinander rastenden Teile (20, 21) hintergreifenden Sicherungsstift (22) gegen ungewolltes Öffnen sicherbar ist.

18. Leitungseinführung nach einem der Ansprüche 1 bis 17, dadurch gekennzeichnet, dass der Verschluss an der Innenseite (6) der beiden Schenkel (2, 3) durch einen durch sich überlappende Vorsprünge (23) od.dgl. hindurchsteckbaren Verschlussstift (22) alleine gebildet ist.

19. Leitungseinführung nach einem der Ansprüche 1 bis 18, dadurch gekennzeichnet, dass bei einer Ausführung aus Metall ein federnder Querstift an dem einen und eine mit diesem zusammenwirkende Nase od.dgl. vorgesehen sind, die zusammen einen Rastverschluss bilden, und dass vorzugsweise zusätzlich ein Sicherungsstift (22) vorgesehen ist.

20. Leitungseinführung nach einem der Ansprüche 1 bis 19, dadurch gekennzeichnet, dass von den Innenseiten der beiden Schenkel (2, 3) nahe der Trennflächen Vorsprünge (23), Flansche od.dgl. radial abstehen, die in Schliessstellung der beiden Schenkel einander überlappen und miteinander fluchtende Lochungen (24) für einen Verschluss und/oder Sicherungsstift (22) haben.

21. Leitungseinführung nach einem der Ansprüche 1 bis 20, dadurch gekennzeichnet, dass zumindest dem von dem Gehäuse abgewandten Winkelschenkel eine Kabelverschraubung vorzugsweise einstückig integriert ist.

22. Leitungseinführung nach einem der Ansprüche 1 bis 21, dadurch gekennzeichnet, dass jeweils an den freien Enden der Winkelschenkel (2, 3) Anschlussgewinde, nämlich Innen- und/oder Aussengewinde, vorgesehen sind.

23. Leitungseinführung nach einem der Ansprüche 1 bis 10 und 13 bis 22, dadurch gekennzeichnet, dass der eine Winkelschenkel (2) eine einstückig angespritzte Gelenkachse (30) und der andere Winkelschenkel (3) eine diese in sich aufnehmende nutförmige Einsenkung (31) als lösbares Gelenk aufweisen, wobei die Nut (31) den Gelenkzapfen (30) in Schliessstellung in Richtung des schwenkbaren Winkelschenkels (2) hintergreift.

24. Leitungseinführung nach einem der Ansprüche 1 bis 23, dadurch gekennzeichnet, dass der eine Winkelschenkel (2) einen etwa kreisbogenförmigen, im Querschnitt hakenförmigen Ansatz (32) und der andere Winkelschenkel (3) im Gelenkbereich eine dazu passende Nut (33) um einen im Querschnitt gerundeten Steg (34) herum aufweist, wobei die Nut (33) in Schliessstellung der beiden Winkelschenkel den Boden des hakenförmigen Halteteiles (32) zumindest um den Schwenkweg des Winkelschenkels (2) fortsetzt.

25. Leitungseinführung nach Anspruch 24, dadurch gekennzeichnet, dass der hakenförmige Halteansatz (32) od.dgl. elastisch aufbiegbar und somit die beiden Winkelschenkel in geöffneter Position voneinander trennbar sind.

26. Leitungseinführung nach einem der vorstehenden Ansprüche, dadurch gekennzeichnet, dass sie vorzugsweise einstückig ein Klemmprofil (35) für das Einklemmen eines an der Aussenseite gewellten Schlauches (36) und eine dazu passende Überwurfmutter (37), insbesondere an dem dem Gehäuse abgewandten Winkelschenkel (3), hat.

27. Leitungseinführung nach einem der vorstehenden Ansprüche, dadurch gekennzeichnet, dass der mit dem Gehäuse verbindbare Gewindeteil (39) od.dgl. und die Leitungseinführung (1) drehbar miteinander gekuppelt sind.

28. Leitungseinführung nach Anspruch 27, dadurch gekennzeichnet, dass der Gewindestutzen (39) od.dgl. mit der winkelförmigen Leitungseinführung (1) und deren ihm zugewandten Winkelschenkel (2) mit einer auf Anschlag aufgeschraubten Überwurfmutter (40), durch Vernieten oder Einbördeln eines der drehbar zu verbindenden Teile, durch einen Sicherungsring (41), durch eine Schnappverbindung zwischen beiden Teilen od.dgl. drehbar gekuppelt sind.

29. Leitungseinführung nach Anspruch 27 oder 28, dadurch gekennzeichnet, dass zwischen den beiden drehbar verbundenen Teilen ein Dichtungsring (42) angeordnet ist.

30. Leitungseinführung nach einem der Ansprüche 27 bis 29, dadurch gekennzeichnet, dass der Sicherungsring (41) von innen oder aussen in einen Einstich oder hinter einen Bund eingreift und/oder dass eine Rast- oder Schnappverbindung mit einem inneren Bund und einem darüber greifenden Absatz oder umgekehrt vorgesehen ist.

31. Leitungseinführung nach einem der Ansprüche 1 bis 30, dadurch gekennzeichnet, dass als Rastverschluss in dem von den beiden Schenkeln (2, 3) gebildeten Winkelraum an dem einen Schenkel (2) zwei parallele Flansche (43) mit voneinander wegweisenden Vorsprüngen (44) und an dem anderen Schenkel (3) zwei Widerlager (45) mit Absätzen (46) vorgesehen sind, die in Schliessstellung von den Vorsprüngen (44) hintergriffen sind, und dass vorzugsweise an dem Winkelschenkel (3) mit den Widerlagern (45) ein zwischen die beiden Flansche (43) des anderen Winkelschenkels (2) passender Stift (47) einsetzbar, insbesondere einschraubbar ist, der die beiden federnden Lappen bzw. Flansche (43) in Schliessstellung auf Abstand hält.

32. Leitungseinführung nach Anspruch 31, dadurch gekennzeichnet, dass der abstandhaltende Stift (47) auf der Höhe der Absätze (46) der Widerlager (45) bzw. der Höhe der Vorsprünge (44) Halteflansche (43) angeordnet ist.

33. Leitungseinführung nach einem der Ansprüche 1 bis 30, dadurch gekennzeichnet, dass zwei parallele Halteflansche (43) mit zueinander gerichteten Vorsprüngen oder Haken (44) an dem einen Winkelschenkel (2) befestigt sind, die in Schliessstellung der Leitungseinführung (1) Vorsprünge (46) an einem zwischen ihnen rastend eingreifenden Widerlager (45) untergreifen und dass vorzugsweise seitlich der federnden Flansche (43) insbesondere auf der Höhe der Haken (44) Anschlagstifte (47) einsetzbar sind.

34. Leitungseinführung nach einem der Ansprüche 1 bis 33, dadurch gekennzeichnet, dass bei einer T-förmigen Anordnung mit zwei schwenkbaren Schenkeln (2 und 13) die beiden Schwenkachsen der Gelenke (7) parallel zueinander mit geringem Abstand vorzugsweise symmetrisch zur Mittelachse des diese Schwenkachse tragenden Schenkels (3) angeordnet sind.

35. Leitungseinführung nach einem der vorstehenden Ansprüche, dadurch gekennzeichnet, dass wenigstens einer der Winkelschenkel ein Innengewinde und ein darin einschraubbares Rohrstück zur Anpassung der Drehstellung der gesamten winkelförmigen Leitungseinführung hat.

36. Leitungseinführung nach einem der Ansprüche 1 bis 35, dadurch gekennzeichnet, dass die ineinanderrastenden Teile (20, 21) des Rastverschlusses in Schliessstellung von einer zweiten Raste (48), vorzugsweise von einem insbesondere federnden Haken, übergriffen und gesichert ist.

**Claims**

1. An angular apparatus for threading conductors, in particular an elbow for electric leads or cables to be threaded at an angle into a housing or the like, the cable extending at a slant or parallel to the surface of the housing and entering the housing at approximately right angles or at a slant and the bending area of the cable or of the lead being surrounded by the conduit and provision being made in the angular area of the conduit for a partition between the two legs of the conduit, characterized in that the two legs (2, 3) are connected in a swivelling manner or in a swivelling and detachable manner at the outside (5) of the angle they form and are adapted to be connected in a detachable manner at the inside (6) of the angle.

2. The conduit as claimed in patent claim 1, characterized in that in a separated condition the two legs (2, 3) are adapted to be swivelled jointly with a cable or the like traversing them and are adapted to be connected and fastened in the swivelled position in which they form an angle.

3. The conduit as claimed in claim 1 or claim 2, characterized in that the two parts (2, 3) which form an angle in the position for use carry on from one another at an angle of 180° in the open position.

4. The conduit as claimed in any one of claims 1 to 3, characterized in that the contacting faces (8) of the two legs have at least one centring means, in particular a centring shoulder (9).

5. The conduit as claimed in any one of claims 1 to 4, characterized in that the centring means (9, 10) is round or oval and extends round the inner cavity (11) of the conduit (1) and in the closed position there is a form fit in the direction of the parting plane of the two parts or legs.

6. The conduit as claimed in any one of claims 1 to 5, characterized in that in the closed position the two legs (2, 3) form an angle of 90° and their parting plane preferably extends in each case at approximately 45° to the two parts.

7. The conduit as claimed in any one of claims 1 to 6, characterized in that a circumferential seal, preferably a sealing ring, in particular an O-ring (12), is disposed in the region of the centring means (9).

8. The conduit as claimed in any one of claims 1 to 7, characterized in that the sealing ring, in particular O-ring, is placed over the protruding centring shoulder (9).

9. The conduit as claimed in any one of claims 1 to 8, characterized in that one of the two legs has a second leg (13) connected thereto in a rigid manner or likewise in a swivelling manner, said second leg preferably forming therewith an angle of approximately 90° and in the closed position composing a straight-lined continuation of the first swivelling leg (2) so that in the closed position a T-shaped connector is produced.

10. The conduit as claimed in any one of claims 1 to 9, characterized in that in the position for use the joint (7) or the like for moving the two parts relative to one another in the direction of swivel for parting the contacting faces (8) thereof is disposed in the extension of the parting plane at the outside of the elbow transversely to the direction in which a cable or the like extends.

11. The conduit as claimed in any one of claims 1 to 10, characterized in that the joint (7) is formed by a cross pin (14) traversing interlocking projections (16) and counterparts (15) on the two swivel-connected parts.

12. The conduit as claimed in any one of claims 2 to 10, characterized in that the joint (7) connecting the two parts (2, 3) is formed by a flexible plastic skin (18) preferably integrally connected to the two parts.

13. The conduit as claimed in any one of claims 1 to 11, characterized in that the two parts adapted to be swivelled relative to one another have on their outside (5) claws (19) or the like forming a joint (7), said claws fitting one another and in particular one engaging behind the other as said parts are swivelled into the closed position.

14. The conduit as claimed in any one of claims 1 to 10, characterized in that the claws (19) which belong to the two parts and form the joint (7) are adapted to be uncoupled in the swivelled-open position.

15. The conduit as claimed in any one of claims 1 to 10 and 14, characterized in that the claws forming the joint interlock in an arresting manner.

16. The conduit as claimed in any one of claims 1 to 10 and 13 to 15, characterized by preferably being made of plastic and the arresting connection of the claws (19) forming the joint (7) is releasable in the opened position.

17. The conduit as claimed in any one of claims 1 to 16, characterized in that an arresting lock is provided for the closed position on the inside (6) of the angle, said lock preferably being adapted to be secured against being inadvertently opened by a locking pin (22) engaging behind the interlocking parts (20, 21).

18. The conduit as claimed in any one of claims 1 to 17, characterized in that the lock on the inside (6) of the two legs (2, 3) is formed solely by a locking pin (22) adapted to be passed through overlapping projections (23) or the like.

19. The conduit as claimed in any one of claims 1 to 18, characterized in that in an embodiment made of metal provision is made for a springy cross pin as well as for a projection or the like cooperating therewith and they together form an arresting lock, and that preferably a locking pin (22) is additionally provided.

20. The conduit as claimed in any one of claims 1 to 19, characterized in that projections (23), flanges or the like protrude radially from the insides of the two legs (2, 3) and near the parting faces, in the closed position of the two legs said projections, flanges or the like overlapping one another and having aligned bores (24) for a locking pin (22).

21. The conduit as claimed in any one of claims 1 to 20, characterized in that a screw-type conduit fitting is integrated, preferably in one piece, in at least the leg averted from the housing.

22. The conduit as claimed in any one of claims 1 to 21, characterized in that threaded connections, namely female and/or male threads, are provided in each case at the free ends of the legs (2, 3).

23. The conduit as claimed in any one of claims 1 to 10 and 13 to 22, characterized in that the one leg (2) has a joint pin (30) injection-moulded onto it in one piece and the other leg (3) has a groove-like depression (31) receiving said pin, the former and the latter together taking the form of a detachable joint, in the closed position the groove (31) engaging behind the joint pin (30) in the direction of the swivelling leg (2).

24. The conduit as claimed in any one of claims 1 to 23, characterized in that the one leg (2) has an extension (32) which is approximately in the shape of a circular arc and is hook-shaped in cross section and in the region of the joint the other leg (3) has a matching groove (33) around a web (34) rounded in cross section, in the closed position of the two legs the groove (33) continuing the arc of the hook-shaped retaining member (32) by at least the swivel path of the leg (2).

25. The conduit as claimed in claim 24, characterized in that the hook-shaped retaining extension (32) or the like is adapted to be bent open elastically and consequently in the opened position the two legs are separable from one another.

26. The conduit as claimed in any one of the preceding claims, characterized by having in particular on the leg (3) averted from the housing, preferably in one piece therewith, a clamping profile (35) for clamping a hose (36) which is corrugated on the outside and a matching cap nut (37).

27. The conduit as claimed in any one of the preceding claims, characterized in that the threaded part (39) or the like adapted to be connected to the housing and the conduit (1) are coupled together in a rotatable manner.

28. The conduit as claimed in claim 27, characterized in that the threaded connecting piece (39) or the like is coupled in a rotatable manner to the angular conduit (1) and the leg (2) which belongs to the latter and faces said connecting piece by means of a cap nut (40) done up to the limit stop, by means of rivetting or bending one of the parts to be rotatably connected, by means of a retaining ring (41), by a snap connection between the two parts or the like.

29. The conduit as claimed in claim 27 or claim 28, characterized in that a sealing ring (42) is disposed between the two rotatably connected parts.

30. The conduit as claimed in any one of claims 27 to 29, characterized in that the retaining ring (41) engages from the inside or outside in a recess or behind a collar and/or that an arresting connection or a snap connection having an inner collar and a shoulder engaging over said collar or vice versa is provided.

31. The conduit as claimed in any one of claims 1 to 30, characterized in that in the angle area formed by the two legs (2, 3) provision is made on the one leg (2) for two parallel flanges (43) with projections (44) pointing away from one another and on the other leg (3) for two abutments (45) with shoulders (46) which the projections (44) engage behind in the closed position in the form of an arresting lock, and that a pin (47) is adapted to be inserted, in particular screwed into preferably the leg (3) having the abutments (45) and fits between the two flanges (43) of the other leg (2), in the closed position said pin keeping apart the two springy flaps or retaining flanges (43).

32. The conduit as claimed in claim 31, characterized in that the spacing pin (47) is disposed at the level of the shoulders (46) of the abutments (45) and at the level of the projections (44) of the flanges (43).

33. The conduit as claimed in any one of claims 1 to 30, characterized in that two parallel retaining flanges (43) with projections or hooks (44) pointing towards one another are secured to the one leg (2), in the closed position of the conduit (1) said projections or hooks engaging under projections (46) on an abutment (45) arrested between said flanges and that stop pins (47) are insertable preferably at the side of the springy flanges (43), in particular at the level of the hooks (44).

34. The conduit as claimed in any one of claims 1 to 33, characterized in that in the case of a T-shaped arrangement with two swivelling legs (2 and 13), the two swivel axes of the joints (7) are disposed parallel to one another at a small distance, preferably symmetrical to the centre axis of the leg (3) bearing said swivel axis.

35. The conduit as claimed in any one of the preceding claims, characterized in that at least one of the legs has a female thread and a pipe length adapted to be screwed into the latter for adapting the rotational position of the entire angular conduit.

36. The conduit as claimed in any one of claims 1 to 35, characterized in that in the closed position a second arresting means (48), preferably a hook, in particular a springy one, engages over and secures the interlocking parts (20, 21) of the arresting lock.

**Revendications**

1. Dispositif angulaire pour l'introduction de conducteurs, en particulier tube coudé, pour introduire sous un certain angle des conducteurs ou des câbles électriques dans un logement ou similaire, dans lequel le câble s'étend obliquement ou parallèlement par rapport à la surface du logement et y pénètre sensiblement à angle droit ou obliquement, la zone de courbure du câble ou du conducteur étant entourée par le dispositif d'introduction de conducteurs, et une séparation étant prévue dans la région du coude du dispositif d'introduction de conducteurs entre les deux branches de ce dispositif d'introduction de conducteurs, caractérisé par le fait que les deux branches (2, 3), sur le côté extérieur (5) du coude qu'elles forment, sont reliées de façon à pouvoir pivoter ou pivoter et se détacher, et peuvent être reliées de manière amovible sur le côté intérieur (6) du coude.

2. Dispositif pour l'introduction de conducteurs selon la revendication 1, caractérisé par le fait que les deux branches (2, 3), séparées l'une de l'autre, peuvent pivoter avec le câble ou similaire qui les traverse, et peuvent être reliées et fixées dans leur position pivotée dans laquelle elles forment un angle.

3. Dispositif pour l'introduction de conducteurs selon la revendication 1 ou 2, caractérisé par le fait que les deux parties (2, 3) qui forment un angle en position d'utilisation sont dans le prolongement l'une de l'autre avec un angle de 180° en position ouverte.

4. Dispositif pour l'introduction de conducteurs selon l'une des revendications 1 à 3, caractérisé par le fait que les surfaces de contact des deux branches présentent au moins un organe de centrage, et en particulier un talon de centrage (9).

5. Dispositif pour l'introduction de conducteurs selon l'une des revendications 1 à 4, caractérisé par le fait que l'organe de centrage (9, 10) est rond ou ovale et s'étend autour de la cavité intérieure (11) du dispositif pour l'introduction de conducteurs (1), et qu'en position de fermeture, il crée une liaison positive dans la direction du plan de séparation des deux parties ou branches.

6. Dispositif pour l'introduction de conducteurs selon l'une des revendications 1 à 5, caractérisé par le fait que les deux branches (2, 3) forment un angle de 90° en position fermée et que leur plan de séparation s'étend de préférence sous un angle de 45° par rapport à chacune des deux parties.

7. Dispositif pour l'introduction de conducteurs selon l'une des revendications 1 à 6, caractérisé par le fait qu'un joint d'étanchéité annulaire, de préférence un anneau d'étanchéité, et en particulier un joint torique (12), est disposé dans la région de l'organe de centrage (9).

8. Dispositif pour l'introduction de conducteurs selon l'une des revendications 1 à 7, caractérisé par le fait que l'anneau d'étanchéité, qui est en particulier un joint torique, est enfoncé sur le talon de centrage en saillie (9).

9. Dispositif pour l'introduction de conducteurs selon l'une des revendications 1 à 8, caractérisé par le fait que l'une des deux branches présente une deuxième branche d'angle (13) qui lui est reliée de manière rigide ou également pivotante, qui forme avec elle un angle de préférence égal à 90° environ, et qui, en position de fermeture, constitue un prolongement rectiligne avec la première branche pivotante (2) de l'angle, de sorte que l'on obtient un organe de liaison en forme de T dans la position de fermeture.

10. Dispositif pour l'introduction de conducteurs selon l'une des revendications 1 à 9, caractérisé par le fait que l'articulation (7) ou similaire qui est destinée au mouvement relatif des deux parties dans le sens de leur pivotement l'une par rapport à l'autre pour séparer leurs surfaces de contact (8), est disposée dans le prolongement du plan de séparation, sur la face extérieure du dispositif angulaire, et perpendiculairement au trajet d'un câble ou similaire en position d'utilisation.

11. Dispositif pour l'introduction de conducteurs selon l'une des revendications 1 à 10, caractérisé par le fait que l'articulation (7) est constituée par une tige transversale (14) qui traverse des saillies (16) et des pièces de forme correspondante (15) qui s'interpénètrent et qui sont formées sur les deux parties reliées par l'articulation.

12. Dispositif pour l'introduction de conducteurs selon l'une des revendications 2 à 10, caractérisé par le fait que l'articulation (7) qui relie les deux parties (2, 3) est formée par un lien flexible (18) en matière plastique de préférence relié aux deux parties en formant une seule pièce.

13. Dispositif pour l'introduction de conducteurs selon l'une des revendications 1 à 11, caractérisé par le fait que les deux parties qui peuvent pivoter l'une par rapport à l'autre présentent sur leur face extérieure (5) des griffes (19) ou similaires qui s'ajustent entre elles pour servir d'articulation (7) et qui entrent en prise lors du pivotement vers la position fermée.

14. Dispositif pour l'introduction de conducteurs selon l'une des revendications 1 à 10, caractérisé par le fait que les griffes (19) qui sont ménagées sur les deux parties et qui forment l'articulation (7) peuvent être détachées dans la position basculée d'ouverture.

15. Dispositif pour l'introduction de conducteurs selon l'une des revendications 1 à 10 et 14, caractérisé par le fait que les griffes qui forment l'articulation s'interpénètrent en s'encliquetant.

16. Dispositif pour l'introduction de conducteurs selon l'une des revendications 1 à 10 et 13 à 15, caractérisé par le fait qu'elles sont constituées de préférence en matière plastique et que l'encliquetage des griffes (19) qui forment l'articulation (7) peut être détaché en position ouverte.

17. Dispositif pour l'introduction de conducteurs selon l'une des revendications 1 à 16, caractérisé par le fait qu'une fermeture à cliquet est prévue sur la face intérieure (6) du coude pour la position de fermeture, et qu'elle est de préférence protégée contre toute ouverture involontaire par une tige de sécurité (22) qui pénètre dans des parties (20, 21) s'encliquetant mutuellement.

18. Dispositif pour l'introduction de conducteurs selon l'une des revendications 1 à 17, caractérisé par le fait que la fermeture sur la face intérieure (6) des deux branches (2, 3) est formée seulement par une tige de fermeture (22) qui peut être enfoncée à travers des saillies (23) ou similaires qui se recouvrent.

19. Dispositif pour l'introduction de conducteurs selon l'une des revendications 1 à 18, caractérisé par le fait que, lorsqu'il est réalisé en métal, une tige transversale élastique, d'une part, et un talon ou similaire coopérant avec elle sont prévus pour former ensemble une fermeture à cliquet, et qu'en outre, de préférence, une tige de sécurité (22) est prévue.

20. Dispositif pour l'introduction de conducteurs selon l'une des revendications 1 à 19, caractérisé par le fait que des saillies (23), des brides ou similaires s'étendent radialement au voisinage des surfaces de séparation à partir des faces intérieures des deux branches (2, 3), qu'elles se recouvrent dans la position de fermeture des deux branches, et qu'elles présentent des perçages (24) alignés entre eux pour une tige (22) de fermeture et/ou de sécurité.

21. Dispositif pour l'introduction de conducteurs selon l'une des revendications 1 à 20, caractérisé par le fait qu'un raccord à vis pour le câble est intégré, de préférence en une seule pièce, à celle au moins des branches de l'angle qui est opposée au logement.

22. Dispositif pour l'introduction de conducteurs selon l'une des revendications 1 à 21, caractérisé par le fait que des filetages de raccordement, à savoir des filetages intérieurs et/ou extérieurs, sont prévus sur les extrémités libres des branches (2, 3) de l'angle.

23. Dispositif pour l'introduction de conducteurs selon l'une des revendications 1 à 10 et 13 à 22, caractérisé par le fait que l'une (2) des branches de l'angle présente un axe d'articulation (30) moulé en une seule pièce avec elle, et que l'autre branche (3) de l'angle présente un renfoncement (31) en forme de rainure se refermant sur elle comme articulation démontable, la rainure (31) recevant la tige d'articulation (30) dans la position de fermeture en direction de la branche pivotante (2) de l'angle.

24. Dispositif pour l'introduction de conducteurs selon l'une des revendications 1 à 23, caractérisé par le fait que l'une (2) des branches de l'angle présente un prolongement (32) sensiblement en arc de cercle et en forme de crochet en section transversale, et que l'autre branche (3) de l'angle présente dans la région de l'articulation une rainure (33) qui s'y adapte autour d'une baguette (34) à section transversale arrondie, la rainure (33) prolongeant le fond de la pièce de maintien en forme de crochet (32) dans la position de fermeture des deux branches de l'angle, du moins sur le trajet du pivotement de la branche (2) de l'angle.

25. Dispositif pour l'introduction de conducteurs selon la revendication 24, caractérisé par le fait que le prolongement de maintien en forme de crochet (32) ou similaire est élastiquement flexible, de sorte que les deux branches de l'angle peuvent être séparées l'une de l'autre en position ouverte.

26. Dispositif pour l'introduction de conducteurs selon l'une des revendications précédentes, caractérisé par le fait qu'en particulier sur la branche (3) de l'angle qui est opposée ou logement, il comprend un profilé de serrage (35) de préférence en une seule pièce avec lui, pour enserrer un tuyau (36) ondulé sur sa surface extérieure, et un écrou-chapeau (37) qui lui est adapté.

27. Dispositif pour l'introduction de conducteurs selon l'une des revendications précédentes, caractérisé par le fait que la partie filetée (39) ou similaire qui peut être reliée au logement et le dispositif (1) pour l'introduction de conducteurs sont accouplés entre eux de façon à pouvoir tourner.

28. Dispositif pour l'introduction de conducteurs selon la revendication 27, caractérisé par le fait que le manchon fileté (39) ou similaire est accouplé de façon à pouvoir tourner au dispositif angulaire d'introduction de conducteurs (1) et à la branche (2) de l'angle qui est tournée vers lui au moyen d'un écrou-chapeau (40) vissé sur un prolongement, ou par rivetage ou sertissage de l'une des parties à relier de manière tournante, ou au moyen d'un anneau de blocage (41), ou grâce à un accouplement à déclic, ou par un moyen similaire.

29. Dispositif pour l'introduction de conducteurs selon la revendication 27 ou 28, caractérisé par le fait qu'un anneau d'étanchéité (42) est monté entre les deux parties reliées de façon à pouvoir tourner.

30. Dispositif pour l'introduction de conducteurs selon l'une des revendications 27 à 29, caractérisé par le fait que l'anneau de blocage (41) pénètre depuis l'intérieur ou depuis l'extérieur dans une rainure ou derrière un collet, et/ou qu'on prévoit un accouplement à déclic ou par cliquet avec un collet intérieur et un décrochement qui le recouvre, ou inversement.

31. Dispositif pour l'introduction de conducteurs selon l'une des revendications 1 à 30, caractérisé par le fait que, dans le coin formé par les deux branches (2, 3), on prévoit comme fermeture à déclic deux brides parallèles (43) munies de saillies (44) en sens opposés l'une de l'autre sur l'une (2) des branches et, sur l'autre branche (3), deux contre-appuis (45) munis de décrochements (46) dans lesquels pénètrent les saillies (44) dans la position de fermeture, et que, de préférence, on peut introduire, et en particulier visser, sur la branche (3) de l'angle qui est munie des contre-appuis (45), une tige (47) qui s'ajuste entre les deux brides (43) de l'autre branche (2) et qui maintient à distance, en position de fermeture, les deux flancs ou pattes élastiques (43).

32. Dispositif pour l'introduction de conducteurs selon la revendication 31, caractérisé par le fait que la tige de maintien à distance (47) est disposée au niveau des décrochements (46) des contre-appuis (45) ou au niveau des saillies (44) des brides de maintien (43).

33. Dispositif pour l'introduction de conducteurs selon l'une des revendications 1 à 30, caractérisé par le fait que deux brides de maintien parallèles (43) munies de saillies ou de crochets (44) dirigés l'un vers l'autre sont fixées à l'une (2) des branches de l'angle qui viennent en prise dans la position de fermeture du dispositif (1) d'introduction de conducteurs avec des saillies (46) ménagées chacune sur un contre-appui (45) entre lesquelles elles s'encliquettent, et que, de préférence, des tiges de butée (47) peuvent être introduites à côté des brides élastiques (43), en particulier au niveau des crochets (44).

34. Dispositif pour l'introduction de conducteurs selon l'une des revendications 1 à 33, caractérisé par le fait que, dans une disposition en forme de T avec deux branches pivotantes (2, et 3), les deux axes de pivotement des articulations (7) sont disposés parallèlement entre eux et à faible distance, de préférence symétriquement par rapport à l'axe médian de la branche (3) qui porte ces axes de pivotement.

35. Dispositif pour l'introduction de conducteurs selon l'une des revendications précédentes, caractérisé par le fait que l'une au moins des branches de l'angle comporte un filetage intérieur et un élément de tube qui peut y être vissé pour l'adaptation de la position angulaire de l'ensemble du dispositif angulaire pour l'introduction de conducteurs.

36. Dispositif pour l'introduction de conducteurs selon l'une des revendications 1 à 35, caractérisé par le fait que les parties (20, 21) qui s'encliquettent entre elles de la fermeture à cliquet sont recouvertes et bloquées en position de fermeture par un second cliquet (48), de préférence par un crochet en particulier élastique.

0 151 273

Fig.1  Fig.2  Fig.3

Fig.5  Fig.4

Fig.6

Fig. 7

Fig. 8

Fig. 10

# Fig. 9

# Fig. 11

Fig. 12

Fig. 13

*Fig.14*

Fig. 15

Fig. 17

Fig. 16

Fig.18

42
41
38
39
24
26
27
23

2
7
1
4
11
3

35
36
37

Fig.19

42
2

Fig.20

42
2

Fig.21

40
2
42

Fig.22

2
42

Fig. 23

Fig. 24

Fig. 25

Fig. 26

0 151 273

Fig. 27

Fig. 28

Fig. 29